# EUROPEAN PATENT SPECIFICATION

(11) **EP 3 617 848 B1**
(45) Date of publication and mention of the grant of the patent: **14.07.2021**
(21) Application number: 18192087.7
(22) Date of filing: 31.08.2018
(51) Int. Cl.: G06F 3/01, H04H 60/04, G06F 3/0354, G06F 3/0362, G11B 27/00, G10H 1/40

(54) **HAPTIC FEEDBACK MUSIC DEVICE COMPRISING ROTATING USER INTERFACE ELEMENT**
HAPTIK-RÜCKMELDUNGS-MUSIKVORRICHTUNG MIT ROTIERENDEM BENUTZEROBERFLÄCHENELEMENT
DISPOSITIF DE MUSIQUE À RÉTROACTION HAPTIQUE COMPRENANT UN ÉLÉMENT D'INTERFACE UTILISATEUR ROTATIF

(43) Date of publication of application: 04.03.2020
(73) Proprietor: Native Instruments GmbH, 10997 Berlin (DE)
(72) Inventor: SPEITH, David, 12045 Berlin (DE)
(74) Representative: Gulde & Partner

(56) References cited:
- US-A1- 2008 291 061
- US-A1- 2010 014 390
- T. BEAMISH ET AL: "Designing the haptic turntable for musical control", HAPTIC INTERFACES FOR VIRTUAL ENVIRONMENT AND TELEOPERATOR SYSTEMS, 20 03. HAPTICS 2003. PROCEEDINGS. 11TH SYMPOSIUM ON 22 AND 23 MAR 2003, 22 March 2003 (2003-03-22), pages 24-31, XP055548987, DOI: 10.1109/HAPTIC.2003.1191221 ISBN: 978-0-7695-1890-9
- TIMOTHY BEAMISH ET AL: "Manipulating music : multimodal interaction for DJs", CHI 2004, 24 April 2004 (2004-04-24), pages 327-334, XP055548997, Vienna, Austria. DOI: 10.1145/985692.985734 ISBN: 978-1-58113-702-6
- Ya Horng Electronic Co. ET AL: "Sound effect control device", , 1 September 2010 (2010-09-01), XP055749919, Retrieved from the Internet: URL:https://twpat7.tipo.gov.tw/tipotwoc/ti potwekm?||FR_M388188 [retrieved on 2020-11-12]

## Description

### FIELD OF THE INVENTION

The present invention relates generally to a haptic feedback user interface device and a related method.

### BACKGROUND OF THE INVENTION

A large number of user interface elements exist for music devices, many of which are rotating, such as knobs and dials. Most of them are one-directional input elements, rather than bi-directional interfaces generating a feedback to the user. Sophisticated rotating user interface elements are particular designed for the DJ segment of music devices, where one or two rotating user interface elements are often the primary user interface for the music device - and as such afford a high level of sophistication.

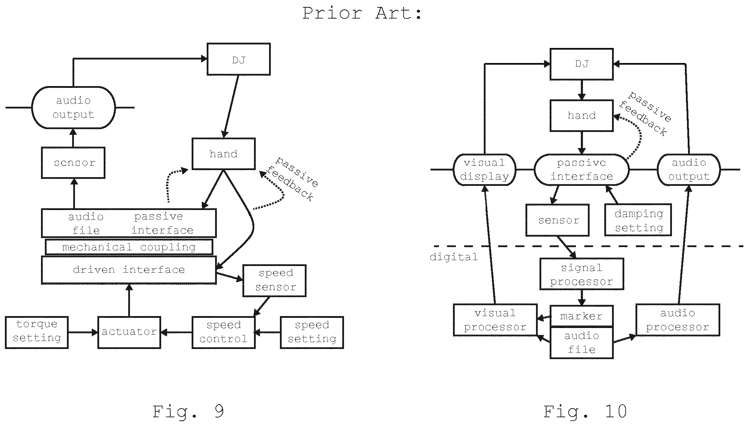

In a first prior art embodiment, as illustrated in Fig. 9, the control device is a turntable with an electric motor as actuator which is propelling a heavy platter as driven interface. Favourably, the motor has adjustable actuator torque and start or stop brake times. Typically, the motor has a twofold speed setting for a nominal speed (e.g. 33 ⅓ or 45 revolutions per minute) and a relative speed setting (e.g. +- 10%). To stabilize the motor drive, a speed sensor is placed in a control loop from the driven interface to a speed control unit to the actuator. A disc of vinyl with a pressed-in audio recording is placed as a passive interface on top of the driven interface favourably with a slip mat in between to improve the mechanical coupling, especially lower the friction for a slipping movement of the passive interface relative to the driven interface. The actuator which is coupled to the driven interface, the mechanical coupling mat and the passive interface are stacked as a coaxial system of three independent parts rotating around a common axis of revolution. A user can interact with his or her hand with either the passive interface or the driven interface to slow down or speed up either movement. A needle is used a sensor to follow a groove in the vinyl, from where the signal is processed to an audio output which is audible by the user. The turntable allows the user to manually control the playback of an audio recording, usually with the purpose of mixing it with a second recording coming from a second turntable. This prior art embodiment has stayed mostly unchanged for decades and is a reference for other prior art embodiments and also some preferred embodiments of the invention.

In a second prior art embodiment, as illustrated in Fig. 10, the control device is a rotating jog controller as a passive interface on a device or connected to a device which is adapted for playback of a digital audio file with an audio processing unit. The passive interface is the only point of interaction and actively rotated by the user hand only. Favourably, a dampening setting adjusts the mechanical resistance of the rotating jog controller. An angular sensor detects the rotation of the passive interface and sends a signal to a signal processing unit which is controlling the audio processing unit. This second prior art element is enabling controls relating to a DJ application only in reminiscence of a turntable without offering the principle user interaction with a motorized turntable, thus excluding many turntable techniques such as scratching.

The DJ music device industry has produced a spectrum of other prior art embodiments which combine features of the first and second prior art embodiment, especially combining the motorized turntable mechanics of the first prior art embodiment with playback of digital files of the second prior art embodiment. The publication by T. BEAMISH ET AL: "Designing the haptic turntable for musical control", HAPTIC INTERFACES FOR VIRTUAL ENVIRONMENT AND TELEOPERATOR SYSTEMS, 20 03. HAPTICS 2003. PROCEEDINGS. 11TH SYMPOSIUM ON 22 AND 23 MAR 2003, 22 March 2003 (2003-03-22), pages 24-31, XP055548987 discloses a haptic turntable for musical control. The publication TIMOTHY BEAMISH ET AL: "Manipulating music : multimodal interaction for DJs", CHI 2004, 24 April 2004 (2004-04-24), pages 327-334, XP055548997, Vienna, Austria discloses a multimodal interaction for disk jockeys using a force-feedback turntable used to manipulate digital audio. US 2010/0014390 A1 discloses position sensitive rotatable DJ control device not using haptics.

Both high cost and space requirements which come with the turntable mechanics of the first prior art embodiment, and in extension with any hybrid combinations with the second prior art embodiment, have been prohibitive to many classes of music devices. The second prior art embodiment is effectively the most popular in DJ devices, simply because it does not come with these cost and space requirements, although it is widely considered the inferior solution.

### SUMMARY OF THE INVENTION

An object of the invention is to improve on the prior art for rotating controllers on DJ music devices by creating a better and adaptable solution around a rotatable user interface for a user to manipulate audio processing of an audio signal. Another object of the invention is to realize a motorized rotatable user interface without the often prohibitive mechanical complexity, size and cost of the first prior art embodiment and its derivatives. Another object of the invention is to extend the use of a rotatable user interface on a DJ device to a broader functionality, and also provide new forms of active feedback via the rotatable user interface.

In accordance with one aspect of the present invention there is provided a haptic feedback music device as defined in claim 1, comprising a rotatable haptic feedback user interface element coupled to an actuator to actively drive the user interface element, at least one means for detecting a user input, and an audio processing unit adapted to process an audio signal according to the detected user input and to output the audio signal via an audio output. A haptic rendering processor is further provided coupled to the means for detecting a user input, the actuator and the audio processing unit, wherein the haptic rendering processor is adapted to receive as input the detected user input, to generate a haptic effect based on the received input, and to output a drive signal to the actuator, the drive signal including the generated haptic effect such that a haptic feedback is generated at the user interface element. The user interface element is directly coupled to the actuator, i.e. without bearings. The actuator consists of a single part, i.e. a one part user interface element is provided. In another embodiment, the user interface element is provided as assembly of parts, but the parts are provided without any relative movement with respect to each other such that all parts of the assembly always perform the same rotational movement resulting form the direct coupling to the actuator. The haptic rendering processor is adapted to receive as further input at least one of the audio signal being processed, parameters of the audio-signal, parameters of the processing of the audio-signal, haptic settings for rendering a haptic effect, and mode selection information.

At least a part of one surface of the user interface element comprises a touch sensor coupled to the haptic rendering processor for detecting a touch input of user. The haptic rendering processor is adapted to generate different drive signals if a surface having the touch sensor is touched or a surface not having the touch sensor of the user interface element is touched. The touch sensor is arranged on a top surface of the user interface element or a side surface of the user interface element.

Thus, a force-feedback user interface element is provided extended with an actuator, e.g. a DC motor. The user interface element can be driven to rotate at certain, constant speed. Its haptic character can be varied by the user and e.g. includes options for emulated damping, inertia, vibration, and rotation parameters. Also other contextual information may be rendered haptically. The inventive force-feedback user interface element could be described as a jog with additional force-feedback and direct actuation.

The device comprises user input detection means, preferably a position sensor to detect rotation and user input. Instead of a bearing at its axis that allows passive rotation, there actuator is preferably directly coupled to the force-feedback user interface element to provide torque to the user interface element and hence allow active rotation to the user interface element. In a haptic rendering processor, user input is processed to generate a torque signal to be provided to the actuator and hence the user interface element.

For instance, set up as a feedback control loop the haptic rendering processor can make the wheel spin at a constant velocity. Depending if the user interface element is touched, different haptic characters can be rendered, e.g. emulating a turntable slip mat. Other use cases for utilizing more sophisticated haptic feedback is the capability to emulate mechanical friction, drive torque strength, damping and/or inertia in order to give a user options to tweak and configure the mechanical character in great detail towards his or her preferences.

Furthermore, state of the art motorized jog wheels require large constructions while in the present invention, the haptic technology can be placed in a slim and flat device design.

Advantageously, slip mats as used in state of the art designs are superfluous while the inventive user interface element can nevertheless be operated by a user similar to a state of the art turntable. Further, the use of a single piece user interface element reduces costs, reduces the weight of the device and allows the user interface to mimic the behaviour of a heavy and a light turntable platter.

Thus, the haptic rendering can be influenced, e.g. by pre-configured settings stored in a memory of the device. In a preferred embodiment, the parameters of the audio-signal, parameters of the processing of the audio-signal, haptic settings for rendering a haptic effect, and mode selection are all user adjustable. Thus, advantageously, the force-feedback can be customized to the specific needs of the user.

A haptic gesture recognition unit may be further provided to map the detected user input to pre-defined haptic gestures, wherein the haptic rendering processor is adapted to render a specific haptic effect based on the recognized haptic gesture, and/or the device is adapted for selection of a specific device mode or to alter a specific haptic setting based on the recognized haptic gesture.

Advantageously, a mode of the device, haptic settings and haptic effects may be adjusted by the user and/or selected by user via pre-defined haptic gestures, which can be stored in a memory of the device.

A haptics gesture, preferably applied in a turntable mode, may be a backspin gesture and the corresponding user input is a fast movement in reverse direction with respect to a reference speed and direction, wherein the associated haptic effect is an emulated inertia for a continued spinning of the user interface element in reverse direction. Thus, the aim of the user to backspin the audio signal processed by the device can be easily detected and a feedback of the detection is outputted or displayed to the user.

Further, a haptics gesture, preferably applied in a turntable mode, may be a tempo gesture and the corresponding user input is a pronounced movement in direction or opposite to a reference speed and direction in order to speed up or slow down an effective speed of the user interface element for a pre-defined time, and wherein the haptic effect is an adjustment of the rotation speed towards the effective speed during the user input, preferably averaged over a predefined time before the user input ends.

A haptics gesture, preferably applied in a turntable mode, may be a starting gesture, preferably applied in a turntable mode, where the initial rotation speed of the user interface element is zero and the corresponding user input is a movement of the user interface element in clockwise direction, wherein the associated haptic effect is sending a start signal to the haptics rendering processor resulting in a continuation of the rotation towards a non-zero reference speed.

In consequence, the device is adapted to detect different user gestures applied to the user interface element and to force-feedback the detection of those gestures back to the user via the user interface element.

The haptic effect may result from an alteration of the drive signal applied to the actuator. The alteration of the drive signal may results from and application of at least one of a speed modulation of the actuator, a torque modulation, an emulated inertia, an emulated damping, emulated springs or emulated boundaries.

In a preferred embodiment, the drive signal provided to the actuator may comprise a superposition of a speed and/or torque signal and a signal representing the generated haptic effect. Thus, only a single drive signal is generated by the haptic rendering processor and applied to the actuator simplifying the haptic effect display at the user interface element.

Advantageously, utilizing a touch sensor in conjunction with force feedback creates an illusion of two mechanically different behaving parts. The device comprises user input detection, for instant a position sensor to detect rotation, and a touch sensor to detect touch events on its conductive top plate. The touch sensor may be a capacitive sensor to detect touch events on its conductive top plate.

Upon a touch input of a user to a top surface of the user interface element, the haptic rendering processor may be adapted to reduce a torque of the actuator.

If the haptic rendering processor receives a start or stop signal, artificial inertia and damping may be generated as a haptic effect.

A selectable mode of the music device may be a turntable mode, and the haptic rendering processor is configured to drive the actuator towards a reference speed in a control loop, wherein the effective speed of the user interface element is continuously mapped to the processing speed of the audio signal.

A selectable mode of the music device may be a jog mode, wherein the initial drive signal to the actuator is zero, and the haptic rendering processor is configured to generate a haptic effect based on emulated friction, emulating damping and emulated inertia applied to the drive signal of the actuator upon a user input to the user interface element.

A selectable mode of the music device may be a grid mode and the haptic rendering processor is configured to receive hot cue information applied to the audio signal or a beat grid of the audio signal and to generate a haptic effect such that if a hotcue or a beat grid is passed in the audio signal, a corresponding haptic effect is provided to the user interface element. The haptic rendering processor may be configured to alter the beat grid upon user interactions applied to the user interface element. The haptic effect may be a detent or direction depending damping.

A selectable mode of the music device may be a haptic audio signal mode, and the haptic rendering processor is configured to generate a haptic effect comprising a damping or vibration proportional to the envelope of the audio signal.

A selectable mode of the music device may be a seek mode and the haptic rendering processor is configured to drive the actuator with an increased speed.

Thus, the invention is advantageously adapted to display specific user desired force feedback by selecting different modes of operation.

The means for detecting a user input is preferably a means for detecting movement of the user interface element, more preferably a means for detecting rotational position and/or angular velocity of the user interface element. Advantageously, only a single sensor can thus be used to measure a user input via a change of the velocity of the user interface element 2 not corresponding to the drive signal, and at the same time, the sensor can be used to control the speed of the user interface element. Such embodiment saves space, time and costs.

In a preferred embodiment the user interface element preferably has the shape of a turntable platter with a circular top surface and an inclined side surface, and the top surface of the user interface element is mounted parallel to a surface of the haptic feedback music device. Thus, a state of the art turntable can be easily mimicked by the present invention without the use of slip mats.

In an alternative embodiment, the user interface element has the shape of a wheel or wheel segment with an axis of revolution parallel to a top surface of a haptic feedback music device. Thus, different orientations of the user interface element provide a large degree of freedom of the operation of the user interface element.

The device may further comprise a visual rendering processor coupled to the haptic rendering processor and/or the audio processing unit, and at least one a visual output element coupled to the visual rendering processor to visually represent the generated haptic effect and/or data associated with the audio signal. Advantageously, not only haptic feedback is provided, but also visual feedback.

The user interface element may be adapted for selection of a mode of the device upon a user input, preferably by a pre-defined gesture. Advantageously, all selections can be made directly via the user interface element.

The device may further comprise a mode selection element for selection of a mode of the device. Thus, a mode of the device may also be selectable without the use of haptic gestures.

In a preferred embodiment the device is a device for playback of an audio signal and the processing of the audio signal relates to processing of a playback of an audio signal.

Thus, the device playbacks an audio signal and the user is able to interfere with the audio signal while being provided with haptic feedback on its interference.

In one embodiment a second actuator is provided to drive the user interface element, and the haptic rendering processor is adapted to output a second drive signal to the second actuator, preferably to render vibration effects perpendicular to a rotational motion of the user interface element. This allows reducing interference between the rotation drive signal and vibrations applied to the user interface element.

Further provided is a corresponding method of controlling a haptic feedback music device as defined in claim 16, comprising the steps of processing an audio signal by and audio processing unit, providing a rotatable a user interface element rotatable by an actuator, applying a user input to the user interface element, detecting a user input, inputting to a haptic rendering processor the detected user input, generating a haptic effect by the haptic rendering processor based on the received input, and outputting a drive signal to the actuator through the haptic rendering processor, the drive signal including the generated haptic effect.

The step of inputting to a haptic rendering processor comprises the step of providing a further input to the rendering processor, the further input comprising at least one of the audio signal being processed, parameters of the audio-signal, rendering settings, parameters of the processing and a mode selection of the music device.

The generation of a haptic effect relates to altering the drive signal applied to the actuator, preferably with respect to a constant reference speed drive signal.

The alteration of the drive signal may result from at least one of a speed modulation of the actuator, a torque modulation, an emulated inertia, an emulated damping, emulated springs or emulated boundaries.

The generation of a haptic effect may be related to the step of superposing a speed and/or torque signal with a signal representing the generated haptic effect as a drive signal outputted to the actuator.

The method further comprises the step of providing a touch sensor on at least a part of one surface of the user interface element for detecting a touch of user, the touch sensor being coupled to the haptic rendering processor. The method further comprises the step of providing the touch sensor on a top surface of the user interface element or a side surface of the user interface element.

The method may further comprise the step of selecting a turntable mode as a mode of the music device and driving the actuator with a constant speed.

The method may further comprise the step of touching a top surface of the user interface element and reducing a torque of the actuator upon detecting of the touch, thus mimicking a light turntable.

The method may further comprise the step of applying a backspin gesture to the user interface element and upon detecting of the backspin gesture, temporarily ramping down the constant reference speed control loop of the actuator and adding artificial inertia at the same time, to then switching back to a constant reference speed control loop once the speed of the user interface element exceeds a threshold value.

The method may further comprise the step of receiving a processing start or stop signal and generating a haptic effect as artificial inertia and damping thus mimicking a heavy turntable. The method may further comprise the step of selecting a jog mode as a mode of the music device, wherein the initial drive signal to the actuator is zero, and generating a haptic effect based on emulated friction, emulating damping and emulated inertia applied to the drive signal of the actuator upon a movement of the user interface element.

The method may further comprise the step of providing a touch sensor to a top surface of the user interface element and coupling the touch sensor to the haptic rendering processor for detecting a touch of user, and the step of generating different drive signals if a top surface of the user interface element or if a side surface of the user interface element is touched.

The method may further comprise the step of selecting a haptic hotcue mode as a mode of the music device and receiving hotcues applied to the audio signal as data associated with the audio signal or as a user input to the user interface element and generating a haptic effect included in the drive signal of the actuator such that if a hotcue is passed in the audio signal, a haptic effect is outputted to the user interface element.

The method may further comprise the step of selecting a haptic beat grid mode as a mode of the music device and receiving a beat grid of the audio signal as data associated with the audio signal and generating a haptic effect included in the drive signal of the actuator such that if a beat grid line is passed, a haptic effect is outputted to the user interface element.

The method may further comprise the step of altering the beat grid of the audio signal upon user interactions applied to the user interface element. The haptic effect may be a detent or direction depending damping.

The method may further comprise the step of selecting a haptic audio signal mode as a mode of the music device and generating a haptic effect comprising a damping or vibration proportional to the envelope of the audio signal.

The method may further comprise the step of selecting a haptic begin or end mode as a mode of the music device and generating a haptic effect representing a haptic spring or wall to indicate a beginning or an end of an audio signal to the user.

The method may further comprise the step of selecting a seek mode as a mode of the music device and driving the actuator with an increased speed.

The user input may be detected by detecting a movement of the user interface element, preferably by detecting a rotational position and/or angular velocity of the user interface element.

The user interface element may have the shape of a turntable with a circular top surface and an inclined side surface.

The method may further comprise the step of providing a visual rendering processor coupled to the haptic rendering processor and/or the audio processing unit, and a visual LED output element coupled to the visual rendering processor to visually represent the generated haptic effect and/or data associated with the audio signal.

The characteristics, features and advantages of this invention and the manner in which they are obtained as described above, will become more apparent and be more clearly understood in connection with the following description of exemplary embodiments, which are explained with reference to the accompanying drawings.

### BRIEF DESCRIPTION OF THE DRAWINGS

In the drawings, same element numbers indicate same elements in each of the views:
- Fig. 1: depicts a first embodiment of the invention,
- Fig. 2: depicts a second embodiment of the invention,
- Fig. 3: depicts a third embodiment of the invention,
- Fig. 4: depicts a schematic representation of a music device according to the invention,
- Fig. 5: shows in a further aspect different modes of an inventive music device according to the invention,
- Fig. 6: exemplarily depicts a turntable mode and associated gestures according to the invention,
- Fig. 7: depicts audio signal aspects according to the invention,
- Fig. 8: depicts a further embodiment of the invention,
- Fig. 9: depicts a first prior art music device,
- Fig. 10: depicts a second prior art music device.

### DESCRIPTION OF THE PREFERRED EMBODIMENTS

Fig. 9 shows a schematic representation of the first prior art embodiment, a turntable to play records pressed on vinyl disks. Passive interface, mechanical coupling, and driven interface are placed on top of each other with a common axis of revolution. A high torque drive motor is the actuator driving the driven interface, which is the turntable platter. A so called slip map is placed as mechanical coupling between the turntable platter and the vinyl. The vinyl disk is both holder of the recording, anachronistically marked as 'audio file', and a passive interface in the sense that it can receive a user input, but is not driven directly. The user input can also go to the directly driven turntable platter. It is not possible to reach the thin slip mat with the vinyl disk on top. Contrary to the proportions in the figure, both vinyl disk and slip mat are very thin and light, compared to a heavy turntable platter. The audio recording is played back at the speed of rotation of the vinyl disk and the signal picked up by the needle is audible by a DJ. The high torque motor is controlled with a speed control loop from a speed sensor detecting the speed of the driven interface. An advanced turntable has adjustable torque. The speed control is always regulating the motor towards a reference speed for the driven interface's rotation. The reference speed is adjustable with a speed setting by the DJ. The only feedback, other than audible, is the passive feedback from the user input is the immediate perception of the user inputs effect on the movement of the mechanical system.

Fig. 10 shows a schematic representation of a second prior art embodiment, a non-motorized jog wheel controller. The jog wheel is a passively rotating element with an adjustable damping. A sensor detects the movement of the jog wheel and sends a signal to a digital signal processor. The signal processor can change the processing of an audio file and attached markers such as hotcues. Audio file and attached marker information are processed by a visual processor and accessible to the DJ through a visual display. The audio file is also processed by an audio processor and audible by the DJ through an audio output. The manual interaction of the DJ to the passive interface is only followed by a weak passive feedback.

From a technical perspective, music, audio and sound can be used interchangeably as they are distinguished by quality not by their technical form. A music device is a device for creating music, performing music, playing music, manipulating music, mixing music, composing music, and/or generally controlling processes related to music. In a music context, the user of a control device or process is generally a musician, specifically a performer, DJ, producer, audio technician, or other music device operator. A user interface, and more specifically a human machine interface, allows a user to interact with a music device or a group of connected music devices by interacting with physical user interface elements. A rotatable user interface element is an interface element with at least one axis of rotation like a dial, a knob as potentiometer or encoder, a jog, a platter, a wheel, a rotating grip, or generally any touchable piece which can be rotated. Haptics is a field generally relating to interaction with objects accessible to touch, and further, the perception of this interaction by a user, usually tactile perception. Haptic feedback is an actively generated haptic experience for the user upon a user input to a haptic interface, in particular to a rotatable user interface element. User input to a rotatable user interface element is in particular the interaction of a part of the user's body, or imaginable an extension to a part of the user's body, with a mechanical system, where the interaction can be in particular transmitted via momentum transfer between rotatable user interface element and body part. For instance, the hand of the user is used to manually rotate a rotatable user interface element around an axis of revolution, and during contact the user feels the movement of the rotatable user interface element including the immediate effect of the user input on this movement.

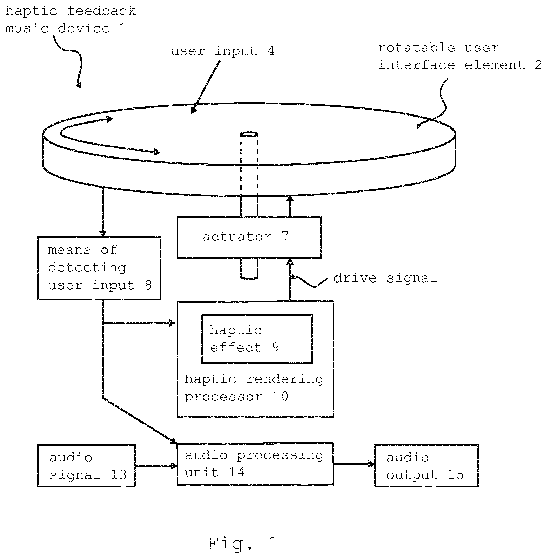

Fig. 1 shows a first preferred embodiment of the invention for a haptic feedback music device 1. A rotatable haptic feedback user interface element 2, in the following for simplification addressed as a user interface element 2, is provided. The user interface element 2 can be preferably shaped as a disk with rotational symmetry to mimic a shape of a turntable. However, other shapes are possible. The user interface element 2 has a degree of freedom for a rotational movement around the axis of revolution, preferably an axis of symmetry. This rotational movement reacts to both the user input 4 applied thereto and the drive signal of an actuator 7, which is coupled, preferably directly coupled without bearings or transmission to the user interface element 2. The actuator's drive depends on a drive signal received from a haptic rendering processor 10. Means for detecting a user input 8 or user input sensor 8 are provided to detect a user input 4 to the user interface element 2. The means for detecting a user input 8 is preferably a means for detecting movement of the user interface element 2, here rotation of the user interface element 2. The means for detecting a user input 8may detect a rotational position and/or an angular velocity of the user interface element 2. Preferably, this allows provision of sensor which can be used for identification of a user input 4 which would influence the rotation speed or rotation direction of the user interface element 2, and also for controlling the rotation speed and rotational direction of the user interface element 2. The means for detecting a user input 8 is implemented to carry a signal to the haptic rendering processor 10, preferably including indication of a change to the movement of the rotational user interface 2 caused by a user input 4. A signal loop originating from the haptic rendering processor 10 is coupled via the actuator 7 to the user interface element 2 and via means for detecting a user input 8 back to the haptic rendering processor 10. A signal from the means for detecting a user input 8 is also connected to an audio processing unit 14 which is processing an audio signal 13 to an audio output 15. In a direct interaction a user input 4 can affect the audio processing unit 14 to process the audio signal 13 according to the user input 4. At the same time the user input 4 is provided as input to the haptic rendering processor 10. A haptic effect 9 can be rendered or generated in the haptic rendering processor 10 according to the user input 4. In one non-limiting example an interference with the signal loop by the user input 4 is received by the haptic rendering processor 10. The generated haptic effect 9 is included in the drive signal for the actuator 7 which applies the haptic effect 9 to the rotatable user interface 2 where a feedback loop is completed as the haptic effect feedback is returned on the user input 4 and displayed at the user interface element 2. Favourably, the haptic rendering processor 10 can render the haptic feedback immediately, i.e. with a short response time, so the user perceives the haptic feedback as virtually simultaneous to the user input 4.

Optionally, a generation of haptic effects 9 may also depend on the audio signal 13 being processed, user adjustable parameters of the audio-signal 13, and user adjustable parameters of the processing of the audio-signal 13, user adjustable haptic settings 11 for rendering a haptic effect (9), and mode selection information. A parameter of the audio-signal 13 may be a beat grid of the audio-signal. A parameter of the processing of the audio signal 13 may be a speed of playback. Haptic settings 11 may refer to the strength of the haptic feedback provided, its duration etc. Such configurations may be pre-set in different modes 23 of the music device. Such haptic settings 11 and modes 23 may be stored in an optional memory of the music device 1.

Furthermore, preferably the user interface element 2 is directly coupled to the actuator 7, and consists of a single part or an assembly of parts provided without any relative movement of its parts with respect to each other such that all parts of the assembly always perform the same rotational movement resulting form the direct coupling to the actuator 7. This is in clear contrast to state of the art embodiments which require a slip mat to mimic the behaviour of a turntable. The slip mat is loosely placed on a turntable platter and can be decoupled from the movement of the platter, e.g. during scratching.

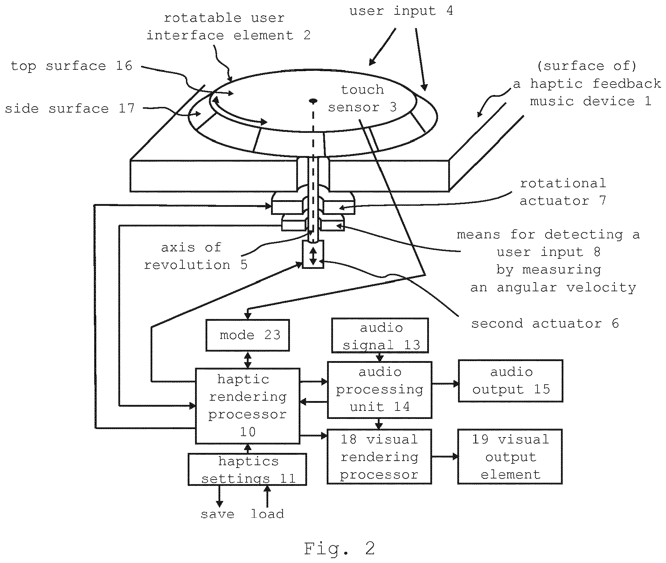

Fig. 2 shows a second preferred embodiment of the invention. The user interface element 2 with an axis of revolution 5 is mounted on top of a surface of a haptic feedback music device 1. The shape of the user interface element 2 is preferred that of a disk with a flat top surface 16 and an inclined side surface 17, resembling the shape of a turntable platter. Again, the invention is not limited to such shape. The top surface 16 is covered by a touch sensor 3, so the whole top surface 16 is sensitive to the touch of a user input 4. However, also only a part of the top surface 16 may be covered by the touch sensor 3, for instance only a ring around the centre of the user interface element 2. A detected touch of the user input 4 is received by the haptics rendering processor 10. Coaxial to the axis of revolution 5 a rotational actuator 7 drives the rotational movement. The rotational user interface element 2 together with the axis connecting it to the actuator 7 is preferably a single rigid assembly, with no relative movement of the internal parts of the assembly, and the actuator's rotation is directly coupled to this assembly. In this embodiment, the means for detecting a user input 8 is a means for detecting the angular velocity 8 of the user interface element 2 such that only one sensor can detect the input and can be used for driving the user interface element. The means for detecting an angular velocity 8 is measuring the angular velocity directly or indirectly via measuring the angular position over time, and sending a signal with that information to a haptic rendering processor 10. However, this means is just one implementation of the means for detecting a user input 8. The means for detecting an angular velocity can however also be separate from the means for detecting a user input 8 . Optionally, a second actuator 6 is connected with the assembly of the rotational user interface and drives a movement of this assembly in direction of the axis of revolution 5, thus always perpendicular to the plane of the rotational movement driven by the actuator 7. In this optional configuration, the rotational actuator 7 and the second actuator 6 receive independent drive signals from the haptic rendering processor 10, which each can include haptic effects 9 generated by the haptic rendering processor 10. The haptic rendering processor 10 may receive a mode selection including haptics settings 11. The haptics rendering processor can receive the audio signal 13 being processed, parameters of the audio signal 13, and parameters of the audio processing from an audio processing unit 14. The haptics settings 11 can be saved from and loaded to the haptic feedback music device 1 to adjust or customize the generation of haptic effects 9 by the haptics rendering processor 10. The haptic rendering processor 10 affects the audio processing unit 14 which is processing the audio signal 13 to an audio output 15. Optionally and not limiting, a visual rendering processor 18 may be provided which is affected by both the haptic rendering processor 10 and the audio processing unit 14 and may render parameters of the audio signal, modes of the haptic rendering processor 10 or the device 1, and haptic effects to a visual output element 19. In this preferred embodiment, the audio processing unit 14 receives a signal indicating the user input 4 indirectly through the haptic rendering processor 10. However, the user input 4 may also be directly provided from the means of detecting a user input 4 to the audio processing unit 14.

The actuator 7 can be a brushless direct current electric motor and the drive signal to the actuator 7 may be a torque signal which is sent to a motor driver. In such a preferred embodiment, haptics effects included in the drive signal are modulations of a torque signal. In a similar embodiment with an intermediate motor driver, the drive signal could also be a speed signal for a sophisticated motor drive control function, where the haptic effects would be modulations of the speed signal. In either case, haptic effects can be utilized to generate an emulation of characteristics of a rotating mechanical system, different to the actual mechanical system of the rotation user interface element, including emulated inertia, emulated damping, and the behaviour of a push or pull against a mechanical spring or against a mechanical boundary. This is possible, because a user does not perceive those properties of rotational mechanics directly. Instead the mechanical properties of the rotating system are perceived from the reaction of the user interface element 2 to a user. It would require higher torque, or a stronger tangential push, from the user input 4 to change the movement of a rotating element with higher inertia. A rotating element with stronger damping would be harder to accelerate and slow down a spinning movement by itself faster. Moving a rotating element against a spring would have it return to a normal position and the spring would generate a force proportional to the distance from that normal position, of course transferred to a torque pointed towards that normal position in angular coordinates. Rotating the element against a boundary would be perceived as a hard stop to the movement, and depending on the resistance of boundary it would require certain strength of the user input 4 to overcome that boundary, if possible. At this point it seems important to point out that in this preferred embodiment the haptic rendering processor 10 could be a digital application running on a high power CPU. The imaginable complexity of a haptic effect for an emulation of mechanical characteristics or other haptic effects is virtually limitless, and it is technically possible to form a superposition of any number of haptics effects with a drive signal inside the digital processing environment. In this second preferred embodiment the drive signal is transferring a simple torque value to the motor, yet with the haptic feedback loop from a user input 4 through the haptic rendering processor 10 and the input of modes 23 which are related to functions or protocols for the different types of haptic effects on the haptics rendering processor, the user interface element 2 is adapted to behave like different emulated rotational systems, for example creating the illusion of a much larger and heavier spinning platter or of a very light passive disk. Further, this illusion can be extended with additional input from the touch sensor 3 which allows a differentiation between a user input 4 to the top surface 16 and a user input 4 to the side surface 17. The touch detection switches a mode 9 of the haptic rendering processor 10. In each of the modes 23 the haptics rendering processor 10 is set to generate a different haptic effect 9 upon a user input 4 which results in a different reaction of the user interface element 2 and thus, the input to these different surfaces is perceived as an interaction with a rotating element with different mechanical characteristics. When alternating the user input 4 between the top surface 16 and side surface 17 the user would perceive the interactions as interactions with two separate rotating elements. For instance, for pitch bending audio at the side surface 17 of the user interface element 2, a user feels a certain torque. To provide precise control for a pitch bending interaction, the control torque of the actuator 7 coupled user interface element 2 is increased to be large enough for "strong" movements resulting in small pitch bends. As soon as the user interface element 2 is touched on the top surface 16, the control loop parameters, most prominently the maximum torque output, are reduced, thus making the wheel "lighter" to enable effortless scratching. This results in a cohesive interaction, emulating two independent parts with different mechanical properties, hence the illusion of decoupling via a slip mat. It is pointed out that the embodiment as described in Fig. 2 can also be driven with just a single actuator 7 as in Fig. 1.

It is pointed out that the touch sensor 3 as shown in Fig. 2 preferably forms a part of all embodiments described throughout this description. Preferably a means for detecting a user input 8 and an additional touch sensor 3 are used throughout the invention. The same holds for the audio output 15.

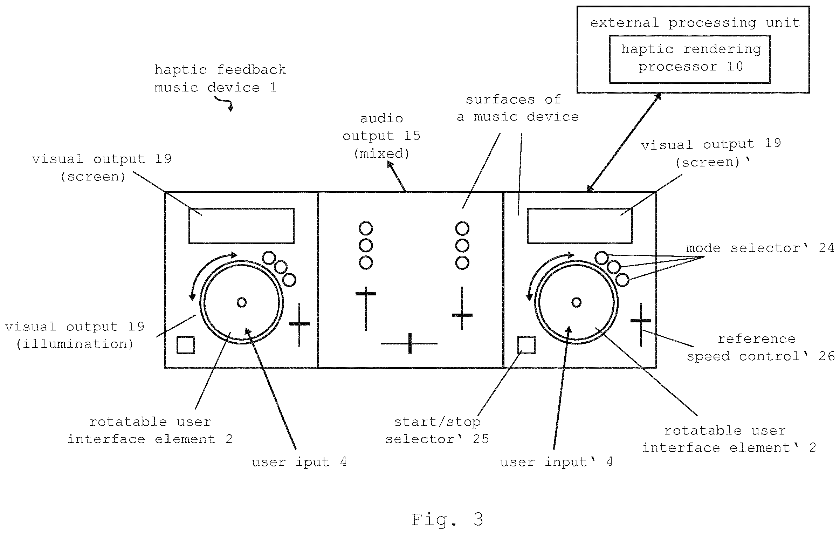

Fig. 3 shows a third preferred embodiment of the invention in a top view on a haptic feedback music device 1 in a configuration illustrating the use of such a device 1 in a DJing context. In DJing the audio signals 13 are usually generated as playback of an audio recording, here saved as a digital audio file. In the centre of the device is a mixer section which regarding the present invention has only the purpose of mixing the audio output from two processed audio signals to a common audio output 15. On either side of the mixer section is an identical configuration of interfaces, most prominently a large user interface element 2. Each of the user interface elements 2 could be of the type described in the second preferred embodiment of the invention. Other input elements on either side are a start/stop selector 25, a fader for controlling a reference speed 26 and some mode selector inputs 24. As visual output elements 19 both sides feature a large screen and a controllable illumination around the respective user interface elements 2. The haptic feedback music device 1 can be a single physical device or formed by modular components which are connected. In this preferred embodiment an external processing unit, specifically a notebook computer or mobile device with powerful CPU, is connected to host the haptic rendering processor 10 to keep low latency between user input 4 and haptic feedback. In a functionally identical configuration, the single physical device could host the haptic rendering processing for either side. In a modular configuration either of the side components could be a haptic feedback music device 1 by itself. The mixer section itself is not the only means for mixing in a wider sense. Mixing by a skilled DJ involves many kinds of interaction with the music device, in particular interactions affecting the processing of the audio signals 13 according to a detected user input 4 to the respective user interface elements 2. The present invention allows new ways and previously unknown flexibility for this type of interaction, some of which will be detailed in further preferred embodiments of the invention.

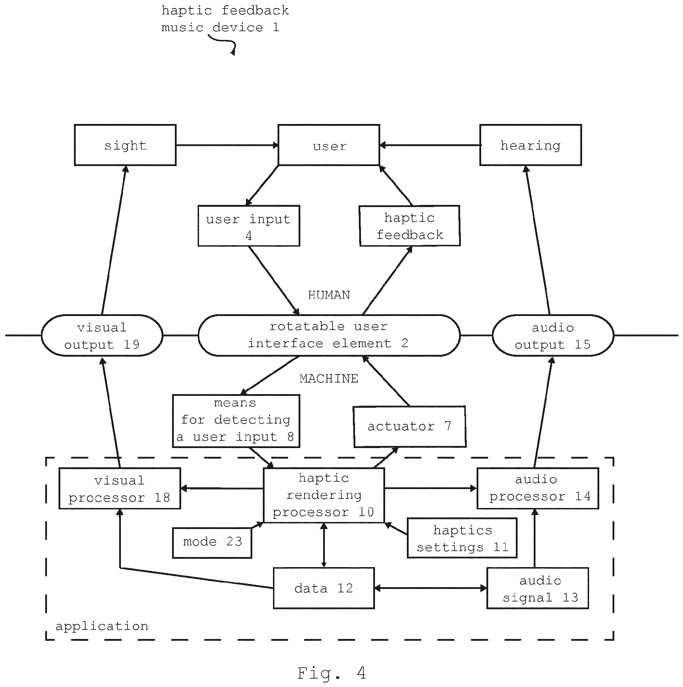

Fig. 4 shows a representation schematic representation of a music device according to the invention with a different perspective on the invention. The haptic feedback music device 1 is a human machine interface with the rotatable haptic feedback user interface element 2, short user interface element 2, as a bi-directional interface between a user and a digital application. There are two secondary interfaces, an optional visual output element 19 and an audio output 15, which are both one-directional interfaces towards the user. The visual output element 19 is perceived using the sense of sight. The audio output is perceived using the sense of hearing. In a music context, the audio output 15 will often be the destination of a user interaction, yet the user of the music device 1 is not a passive consumer of the audio signal 13. The user is actively interacting with the music device 1 and controlling the audio processing by means for interacting with the user interface element 2. The inputs and outputs to the user interface element 2 are in a mirrored relation to either side of the interface. On one side, a sensor 8 is receiving a superposition of the user input 4 and the drive of the actuator 7. On the other side, the user is receiving haptic feedback at the time of user input 4 which is again a superposition of the user input 4 and the drive of the actuator 7 including the haptic effect 9. To be exact, there is a third component of the movement received by the user and sensor, namely the passive mechanical continuation of the rotation from the conservation of rotational energy. On the machine side of the picture, sensor 8 and actuator 7 are connected to the haptic rendering processor 10. The haptic rendering processor 10 affects both the visual processor 18 and the audio processor 14, which are each connected to their respective outputs. The haptics rendering processor 10 may receive as inputs data 12 including mode 23 and haptics settings 11. In the haptic feedback loop, haptic effects 9 are the result of a user input 4 which is detected by the means for detecting a user input 8 as part of the movement of the rotatable user element 2 and processed by the haptic rendering processor 10. The processing of the haptic rendering processor 10 depends on its inputs including the mode 23. The generated haptic effect 9 is sent to the actuator 7 which is driving the movement of the user interface element 2.

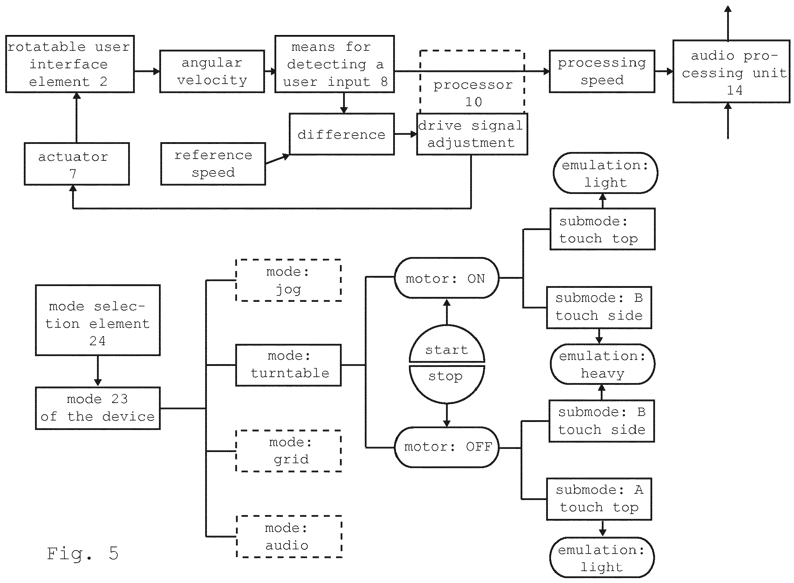

Fig. 5 shows in a further aspect different modes of an inventive music device according to the invention as an addition to any embodiment of the invention utilizing mode selection and touch sensor 3. The user can access a mode selection element 24 to select the mode 23 of the device 1. There may be four modes 23 available in this embodiment: a jog mode, a turntable mode, a grid mode, and an audio mode. More modes are of course possible. The selected mode 23 determines how the haptic rendering processor 10 reacts to a user input 4. On a deeper level, the turntable mode may contain four different sub modes, in which the haptics rendering processor 10 generates a different drive signal and renders different haptic effects to this drive signal. Theses turntable sub modes have in common, that the angular velocity of the rotatable user interface is proportionally mapped to the processing speed of the audio processing unit 14. Where the processing of the audio signal 13 is playback of an audio signal 13, the angular velocity of the rotatable user interface element 2 is mapped to the playback speed. The angular velocity of the rotatable user interface element 2 is measured by a sensor as means for detecting a user input 8, then preferably smoothed over time by a processor 10 to avoid stutter in the playback, and finally converted to the processing speed for the audio processing unit 14. In turntable mode, the device can be set to a "motor: ON" mode in which the drive signal is continuously regulated in a control loop with the measured angular velocity. For a set reference speed, again technically an angular velocity value like 45 revolutions per minute, the detected effective angular velocity is compared to this reference speed and depending on the difference; the drive signal is adjusted accordingly. Where the drive signal is a torque signal, the torque value is increased for speeding up towards the reference speed, and the torque value is decreased for slowing down. In this mode 23, without user interference, the rotation of the interface element 2 will stabilize at the reference speed. The behaviour of the user interface element 2 to a user input 4 may optionally depend further on the position of the user input 4 on the surface of the interface element 2. A user input 4 to the top surface 16 will be detected by the touch sensor 3, thus the haptic effect 9 generated by the haptic rendering processor 10 can be specific for this part of a turntable emulation, for instance and not limiting the emulation of an interaction with a vinyl disk which is coupled by friction to a driven turntable platter, and where the vinyl disk will furthermore perform a slipping motion relative to the platter. For the vinyl interaction emulation, emulated inertia and emulated damping are low, and the rotatable user interface element 2 will follow the user input 4 easily, allowing very dynamic movements like scratching techniques popular in some genres of DJing. A user input 4 to the side surface 17 however will not trigger a detection by the touch sensor 3, thus the haptic effect 9 generated by the haptic rendering processor 10 can be different. For instance, a turntable emulation can be achieved, namely the emulation of an interaction with the rim of a turntable platter. For the platter interaction emulation, emulated inertia and emulated damping will be high, and the rotatable user interface element 2 will follow the user input 4 only reluctantly and use higher torque to return to the reference speed, allowing for more careful adjustments to the movement of the rotatable user interface element 2 like nudging small steps forward or backward. The device can also be set to "Motor: OFF" mode, where the reference speed for the rotation is set to zero. Again, this mode 23 has the same or similar haptic effects 9 for a light vinyl interaction for a user input 4 to the top surface 16 and a heavy platter interaction for a user input 4 to the side surface 17. The user can switch between "Motor: ON" and "Motor: OFF" using a start/stop selector input element 25. The user can adjust the reference speed using a reference speed control input element 26. Transitions between these mode changes and reference speed changes are also rendered by the haptic rendering processor 10 to emulate characteristic starting or breaking behaviour of a turntable.

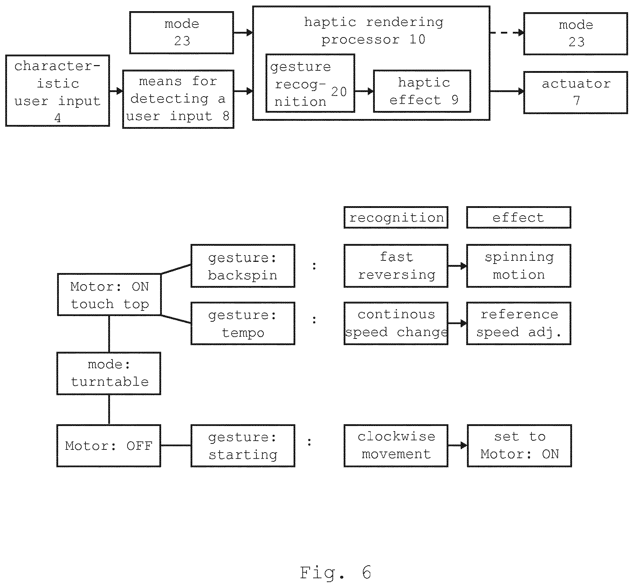

Fig. 6 shows a schematic representation of a turntable mode and associated gestures according to the invention which is adding the functionality of haptic gestures to the haptic feedback music device 1. Simple haptic feedback is the immediate behaviour of the user interface element 2 to a user input 4. In more advanced functionality, the haptic rendering processor 10 can process complex or enduring user input 4 detected by means for detecting a user input 8 as a characteristic user input. According to a mode 23, the haptic rendering processor 10 will recognize this characteristic user input 4 and generate a corresponding haptic effect 9 which is included in the drive signal of the actuator 7, and may be also used to change the mode 23. Extending for instance the example of the fifth preferred embodiment of the invention, Fig. 6 also shows three gestures for a turntable mode. A starting gesture is only active in "Motor: OFF" sub mode. In this mode the reference speed is zero and without a user input 4 the user interface element 2 does not rotate. Is a characteristic user input 4 recognized by a gesture recognition unit 20, for instance as a movement of the user interface element 2 in clockwise direction, which is the natural rotation direction of a turntable, preferably over a defined minimum angular segment in a certain time, the motor is turned on. Now the haptic rendering processor 10 will react to the mode change and render a starting behaviour of the user interface element 2 towards the reference speed, possibly during a continued user interaction with the user interface element 2. A backspin gesture is available in turntable mode in "Motor: ON" sub mode. A characteristic user input 4 to the top surface 16 is recognized as a fast reverse movement against the direction of the reference speed and this movement is passing a certain angular segment in a certain time. In an actual backspin on a turntable, the coupling between vinyl and platter is effectively only dynamic friction and the driven movement becomes de-coupled. Thus, in the haptic effect 9 following the recognition of a characteristic backspin user input, is not a fast return to the reference speed, but rather the emulation of the inertia and behaviour of a light freely spinning disk. After some time, the return to the reference speed is also emulated by the haptic rendering processor 10. Alternatively, the motor is stopped and the user interface element 2 spins out with an emulated damping.

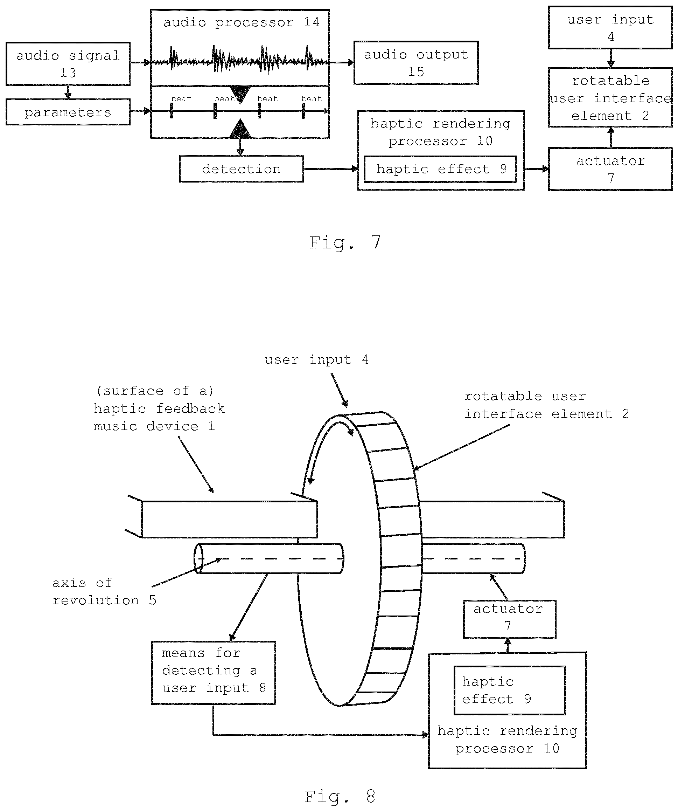

Fig. 7 shows a schematic representation of audio signal aspects according to the invention. An audio signal 13 can be represented as a waveform, which is the plot of signal amplitude over time, where for a digital audio file the time axis is actually discrete, divided in samples. In a preferred embodiment of the invention the audio signal 13 is associated with parameters of the audio signal 13 which are related to points in time of the audio signal's original time axis. These time position markers can be references to the musical phrasing or measure in the audio signal 13, for example the beat division of a song. The sum of all beat dividers of a song, like a metronome for timing, forms the so called beat grid, which is not necessarily regularly spaced over the entire audio signal 13. Manually placed markers for suitable entry points in timeline of an audio signal 13 are called cue points, and in DJing often hotcues. In a preferred embodiment of the invention, the audio processor 14 is playing back the audio signal 13 at a processing speed, which can differ from the audio signals original speed for faster or slower playback. Time position markers as parameters of the audio signal 13 are also processed at the same processing speed. Whenever a time position marker, for example a beat in the beat grid or a hotcue, is passed, this event is detected and the detection is received by the haptics rendering processor 10. A haptic effect 9 is generated by the haptic rendering processor 10 and included into the drive signal to the actuator 7 which is exerting the haptic effect 9 to the rotatable user interface element 2. During user input 4 this haptic effect 9 will be experienced by the user, alerting the user of the event. This is particular useful for finding cue points when browsing fast through an audio signal 13. Additional haptic effects 9 like the emulation of the rotatable elements 2 movement are generated in the haptic feedback loop from the rotatable user interface element 2 via means of detecting a user input 8 to the haptic rendering processor 10. These other haptic effects 9 can be superposed with the haptic effects 9 of the parameters of the audio signal 13 as they can be included together in the drive signal to the actuator 7. The haptic effects 9 for passing a tick of the beat grid or a hotcue can be emulated damping or a vibration of the rotatable user interface element 2.

Fig. 8 shows a schematic representation of an eighth preferred embodiment of the invention. The rotatable user interface element 2 is shaped like a wheel rotating around an axis of revolution 5. A part of the wheel 2, which is above the surface of a music device 1, is accessible to a user input 4. In a preferred embodiment of the invention, the axis of revolution is placed parallel to the surface of the music device 1 and also below the surface of the music device 1. In a preferred embodiment of the invention, the rotatable user interface element 2 is shaped as only a segment of a wheel, which would then only allow a movement range limited to a fraction of a full revolution. The rotational movement of the rotatable user interface element 2 is driven by an actuator 7 and a signal for the movement of the user interface element 2 is received by the haptic rendering processor 10, which generates a haptic effect 9 to be included in the drive signal of the actuator 7. One application for the eighth preferred embodiment of the invention would be the use as a haptic pitch bend or modulation wheel as left-hand expression controller on a music device with keys, especially a controller keyboard. In such an application, the audio signal 13 would typically be the result of a different input, to be specific by playing the keys of the keyboard with a hand. In a likely fully digital implementation of such an application, both generation and processing 14 could be part of a single sampler or synthesizer engine, where sampler generate sound from existing audio signal 13 and synthesizers create the audio signal 13 from miscellaneous processes.

To conclude, a music device with a rotatable haptic user interface element is provided extended with a motor. The construction is preferably still a one-part user interface element but can nevertheless be operated by a DJ similar to a turntable. By utilizing, in a preferred embodiment, a touch sensor in conjunction with force feedback an illusion of two mechanically different behaving parts is presented. The user interface element can be driven to rotate at certain, constant speed. Its haptic character can be varied by the user and includes options for emulated damping, inertia, vibration, and rotation parameters. Also other contextual information can be rendered haptically. Different modes 23 of the music device can be defined to influence the rendering of a haptic effect 9. Haptic gestures can be defined to select the different modes 23 or to alter the rendering process and the data to be haptically rendered.

It is clear from the description that the embodiments are interrelated and not meant to replace each other. Rather, the embodiments show aspects of the invention which could be present in any one of the embodiment.

While this invention has been described in connection with what is presently considered to be practical exemplary embodiments, it is to be understood that the invention is not limited to the disclosed embodiments, but, on the contrary, is intended to cover various modifications included within the scope of the appended claims

### List of reference signs

- 1: haptic feedback music device
- 2: rotating user interface element
- 3: touch sensor
- 4: user input
- 5: axis of revolution
- 6: second actuator
- 7: actuator
- 8: means for detecting a user input
- 9: haptic effect
- 10: haptic rendering processor
- 11: haptics settings
- 12: further input data for haptic rendering processor
- 13: audio signal
- 14: audio processing unit
- 15: audio output
- 16: top surface
- 17: side surface
- 18: visual rendering processor
- 19: visual output element
- 20: gesture recognition unit
- 23: mode
- 24: mode selector
- 25: start/stop selector
- 26: reference speed control

## Claims

1. A haptic feedback music device (1) comprising:
a rotatable haptic feedback user interface element (2) coupled to an actuator (7) configured to actively drive the user interface element (2),
at least one means for detecting a user input (8),
an audio processing unit (14) adapted to process an audio signal (13) according to the detected user input (4) and to output the audio signal (13) via an audio output (15),
wherein
a haptic rendering processor (10) is provided coupled to the means for detecting a user input (8), the actuator (7) and the audio processing unit (14), wherein the haptic rendering processor (10) is adapted:
to receive as input the detected user input (4),
to generate a haptic effect (9) based on the received input, and
to output a drive signal to the actuator (7), the drive signal including the generated haptic effect (9) such that a haptic feedback is generated at the user interface element (2),
wherein the user interface element (2) is directly coupled to the actuator (7), and consists of a single part or an assembly of parts provided without any relative movement of its parts with respect to each other such that all parts of the assembly always perform the same rotational movement resulting from the direct coupling to the actuator (7),
wherein the haptic rendering processor (10) is adapted to receive as further input at least one of:
the audio signal (13) being processed,
user adjustable parameters of the audio-signal (13),
user adjustable parameters of the processing of the audio-signal (13),
user adjustable haptic settings (11) for rendering a haptic effect (9), and a
mode selection information; wherein the user interface element (2) comprises a top surface (16) and a side surface (17);
**characterized in that**
at least a part of one surface of the user interface element (2) comprises a touch sensor (3) coupled to the haptic rendering processor (10) for detecting a touch input of the user, the touch sensor (3) being arranged on the top surface (16) of the user interface element (2) or on the side surface (17) of the user interface element,
wherein the device is configured to switch a mode of the haptic rendering processor (10) depending on whether a surface, being one of the top surface (16) or the side surface (17), having the touch sensor (3) or a surface, being one of the top surface (16) or the side surface (17), not having the touch sensor (3) is touched, such that the haptic rendering processor (10) generates different drive signals depending on the selected mode.

2. The device according to claim 1, further comprising a haptic gesture recognition unit (20) to map the detected user input (4) to pre-defined haptic gestures, wherein
the haptic rendering processor (10) is adapted to render a specific haptic effect (9) based on the recognized haptic gesture, and/or
the device (1) is adapted for selection of a specific device mode (23) or to alter a specific haptic setting (11) based on the recognized haptic gesture.

3. The device of claim 2, wherein the haptics gesture is a backspin gesture and the corresponding user input (4) is a fast movement in reverse direction with respect to a reference speed and direction, wherein the associated haptic effect (9) is an emulated inertia for a continued spinning of the user interface element (2) in reverse direction.

4. The device of claim 2, wherein the haptics gesture is a tempo gesture and the corresponding user input (4) is a pronounced movement in direction or opposite to a reference speed and direction in order to speed up or slow down an effective speed of the user interface element (2) for a pre-defined time, and wherein the haptic effect (9) is an adjustment of the rotation speed towards the effective speed during the user input (4), preferably averaged over a predefined time before the user input (4) ends.

5. The device of claim 2, wherein the haptics gesture is a starting gesture where the initial rotation speed of the user interface element (2) is zero and the corresponding user input (4) is a movement of the user interface element (2) in clockwise direction, wherein the associated haptic effect (9) is sending a start signal to the haptics rendering processor (10) resulting in a continuation of the rotation towards a non-zero reference speed.

6. The device of any one of the previous claims, wherein the haptic effect (9) results from an alteration of the drive signal applied to the actuator (7), preferably from an application of at least one of a speed modulation of the actuator (7), a torque modulation, an emulated inertia, an emulated damping, emulated springs or emulated boundaries.

7. The device of claim 1, wherein a selected mode (23) of the music device (1) is a turntable mode, and the haptic rendering processor (10) is configured to drive the actuator (7) towards a reference speed in a control loop, wherein the effective speed of the user interface element (2) is continuously mapped to the processing speed of the audio signal (13).

8. The device of claim 1, wherein a selected mode (23) of the music device (1) is a jog mode, wherein the initial drive signal to the actuator (7) is zero, and the haptic rendering processor (10) is configured to generate the haptic effect (9) based on emulated friction, emulating damping and emulated inertia applied to the drive signal of the actuator (7) upon the user input (4) to the user interface element (2).

9. The device of claim 1, wherein the haptic rendering processor (10) is configured to receive hot cue information applied to the audio signal (13) or a beatgrid of the audio signal (13) and to generate the haptic effect (9) such that if a hotcue or a beatgrid is passed in the audio signal (13), a corresponding haptic effect (9) is provided to the user interface element (2), preferably the haptic effect (9) being a detent or direction depending damping.

10. The device of any one of the previous claims, wherein the haptic rendering processor (10) is configured to alter a beatgrid of the audio signal (13) upon the user interaction applied to the user interface element (2).

11. The device of any one of the previous claims, wherein the means for detecting the user input (8) is a means for detecting movement of the user interface element (2), preferably a means for detecting rotational position and/or angular velocity of the user interface element (2).

12. The device of any one of the previous claims, wherein the user interface element (2) has the shape
of a turntable platter with the top surface (16) being circular and the side surface (17) being inclined, the top surface (16) of the user interface element (2) being preferably mounted parallel to a surface of the haptic feedback music device (1), or
of a wheel or wheel segment with an axis of revolution parallel to the top surface (16) of the haptic feedback music device (1).

13. The device of any one of the previous claims, further comprising a visual rendering processor (18) coupled to the haptic rendering processor (10) and/or the audio processing unit (14), and at least one visual output element (19) coupled to the visual rendering processor (18) to visually represent at least one of the generated haptic effect (9), parameters of the audio signal (13), parameters of the processing of the audio signal (13), haptic settings (11), and the mode selection.

14. The device of any one of the previous claims, wherein the device is a device (1) for playback of the audio signal (13) and the processing of the audio signal (13) relates to processing of the playback of the audio signal (13).

15. The device of any of the previous claims, wherein a second actuator (6) is provided to drive the user interface element (2), and the haptic rendering processor (10) is adapted to output a second drive signal to the second actuator (6), preferably to render vibration effects perpendicular to a rotational motion of the user interface element.

16. A method of controlling the haptic feedback device of claim 1 comprising the steps of:
providing a rotatable haptic feedback user interface element (2) rotatable by an actuator (7), wherein the user interface element (2) is directly coupled to the actuator (7), and consists of a single part or an assembly of parts provided without any relative movement of its parts with respect to each other such that all parts of the assembly always perform the same rotational movement resulting from the direct coupling to the actuator (7), and wherein the user interface element (2) comprises a top surface (16) and a side surface (17);
applying, by a user, a user input (4) to the user interface element (2),
detecting the user input (4) to the user interface element (2), processing an audio signal (13) by an audio processing unit (14) according to the detected user input (4) outputting the audio signal (13) via an audio output (15),
inputting to a haptic rendering processor (10) the detected user input (4) and data associated with the audio signal (13) and further receiving, by the haptic rendering processor (1) at least one of:
the audio signal (13) being processed,
user adjustable parameters of the audio-signal (13),
user adjustable parameters of the processing of the audio-signal (13),
user adjustable haptic settings (11) for rendering a haptic effect (9), and
a mode selection information,
generating a haptic effect (9) by the haptic rendering processor (10) based on the received input, and
outputting a drive signal to the actuator (7) through the haptic rendering processor (10), the drive signal including the generated haptic effect (9) such that a haptic feedback is generated at the user interface element (2),
**characterized in that**
at least a part of one surface of the user interface element (2) comprises a touch sensor (3) coupled to the haptic rendering processor (10) for detecting a touch input of the user, the touch sensor (3) being arranged on the top surface (16) of the user interface element (2) or the side surface (17) of the user interface element switching
a mode of the haptic rendering processor (10) depending on whether a surface, being one of the top surface (16) or the side surface (17), having the touch sensor (3) or a surface, being one of the top surface (16) or the side surface (17), not having the touch sensor (3) is touched, such that the haptic rendering processor (10) generates different drive signals depending on the selected mode.

## Patentansprüche

1. Haptische Feedback gebende Musikvorrichtung (1), umfassend:
ein drehbares, haptisches Feedback gebendes Benutzeroberflächenelement (2), das mit einem Aktuator (7) gekoppelt ist, der dazu ausgestaltet ist, das Benutzeroberflächenelement (2) aktiv anzutreiben,
wenigstens ein Mittel zum Detektieren einer Benutzereingabe (8),
eine Audioverarbeitungseinheit (14), die dazu ausgelegt ist, ein Audiosignal (13) gemäß der detektierten Benutzereingabe (4) zu verarbeiten und das Audiosignal (13) über einen Audioausgang (15) auszugeben,
wobei
ein Prozessor zum haptischen Rendern (10) vorgesehen ist, der mit dem Mittel zum Detektieren einer Benutzereingabe (8), dem Aktuator (7) und der Audioverarbeitungseinheit (14) gekoppelt ist, wobei der Prozessor zum haptischen Rendern (10) für Folgendes ausgelegt ist:
Empfangen der detektierten Benutzereingabe (4) als Eingabe,
Erzeugen eines haptischen Effekts (9) basierend auf der empfangenen Eingabe und
Ausgeben eines Antriebssignals an den Aktuator (7), wobei das Antriebssignal den erzeugten haptischen Effekt (9) umfasst, so dass an dem Benutzeroberflächenelement (2) ein haptisches Feedback erzeugt wird,
wobei das Benutzeroberflächenelement (2) direkt mit dem Aktuator (7) gekoppelt ist und aus einem einzigen Teil oder einer Baugruppe aus Teilen, die ohne jegliche Relativbewegung ihrer Teile in Bezug aufeinander bereitgestellt ist, so dass alle Teile der Baugruppe stets die gleiche, aus der direkten Kopplung mit dem Aktuator (7) resultierende Drehbewegung vollziehen, besteht,
wobei der Prozessor zum haptischen Rendern (10) dazu ausgelegt ist, als weitere Eingabe wenigstens eines aus den Folgenden zu empfangen:
das verarbeitete Audiosignal (13),
durch den Benutzer anpassbare Parameter des Audiosignals (13),
durch den Benutzer anpassbare Parameter der Verarbeitung des Audiosignals (13),
durch den Benutzer anpassbare Haptik-Einstellungen (11) zum Rendern eines haptischen Effekts (9) und
eine Modusauswahlinformation;
wobei das Benutzeroberflächenelement (2) eine obere Fläche (16) und eine Seitenfläche (17) umfasst;
**dadurch gekennzeichnet, dass**
wenigstens ein Teil einer Fläche des Benutzeroberflächenelements (2) einen mit dem Prozessor zum haptischen Rendern (10) gekoppelten Berührungssensor (3) zum Detektieren einer Berührungseingabe des Benutzers umfasst, wobei der Berührungssensor (3) auf der oberen Fläche (16) des Benutzeroberflächenelements (2) oder auf der Seitenfläche (17) des Benutzeroberflächenelements angeordnet ist,
wobei die Vorrichtung dazu ausgestaltet ist, einen Modus des Prozessors zum haptischen Rendern (10) umzuschalten, abhängig davon, ob eine Fläche, die eine aus der oberen Fläche (16) oder der Seitenfläche (17) ist, die den Berührungssensor (3) aufweist, oder eine Fläche, die eine aus der oberen Fläche (16) oder der Seitenfläche (17) ist, die den Berührungssensor (3) nicht aufweist, berührt wird,
so dass der Prozessor zum haptischen Rendern (10) abhängig von dem ausgewählten Modus unterschiedliche Antriebssignale erzeugt.

2. Vorrichtung nach Anspruch 1, die ferner eine Einheit zur Erkennung haptischer Gesten (20) zum Abgleichen der detektierten Benutzereingabe (4) mit vorab definierten haptischen Gesten umfasst, wobei
der Prozessor zum haptischen Rendern (10) dazu ausgelegt ist, basierend auf der erkannten haptischen Geste einen spezifischen haptischen Effekt (9) zu rendern, und/oder
die Vorrichtung (1) für eine Auswahl eines spezifischen Vorrichtungsmodus (23) oder zum Ändern einer spezifischen Haptik-Einstellung (11) basierend auf der erkannten haptischen Geste ausgelegt ist.

3. Vorrichtung nach Anspruch 2, wobei die haptische Geste eine Backspin-Geste ist und die entsprechende Benutzereingabe (4) eine schnelle Bewegung in umgekehrter Richtung in Bezug auf eine Referenzgeschwindigkeit und -richtung ist, wobei der zugehörige haptische Effekt (9) eine emulierte Trägheit für eine fortgesetzte Drehung des Benutzeroberflächenelements (2) in umgekehrter Richtung ist.

4. Vorrichtung nach Anspruch 2, wobei die haptische Geste eine Tempo-Geste ist und die entsprechende Benutzereingabe (4) eine deutliche Bewegung in Richtung oder entgegengesetzt zu einer Referenzgeschwindigkeit und -richtung ist, um eine effektive Geschwindigkeit des Benutzeroberflächenelements (2) eine vorab definierte Zeit lang zu beschleunigen oder zu verlangsamen, und wobei der haptische Effekt (9) eine Anpassung der Drehgeschwindigkeit hin zu der effektiven Geschwindigkeit während der Benutzereingabe (4) ist, vorzugsweise über eine vorab definierte Zeit, bevor die Benutzereingabe (4) endet, gemittelt.

5. Vorrichtung nach Anspruch 2, wobei die haptische Geste eine Start-Geste ist, wo die anfängliche Drehgeschwindigkeit des Benutzeroberflächenelements (2) Null ist und die entsprechende Benutzereingabe (4) eine Bewegung des Benutzeroberflächenelements (2) im Uhrzeigersinn ist, wobei der zugeordnete haptische Effekt (9) ein Senden eines Startsignals an den Prozessor zum haptischen Rendern (10) ist, was eine Fortsetzung der Drehung hin zu einer nicht Null betragenden Referenzgeschwindigkeit zur Folge hat.

6. Vorrichtung nach einem der vorangehenden Ansprüche, wobei der haptische Effekt (9) aus einer Änderung des an den Aktuator (7) angelegten Antriebssignals, vorzugsweise aus einem Anlegen wenigstens eines aus einer Geschwindigkeitsmodulation des Aktuators (7), einer Drehmomentmodulation, einer emulierten Trägheit, einer emulierten Dämpfung, emulierten Sprüngen oder emulierten Grenzen, resultiert.

7. Vorrichtung nach Anspruch 1, wobei ein ausgewählter Modus (23) der Musikvorrichtung (1) ein Turntable-Modus ist und der Prozessor zum haptischen Rendern (10) dazu konfiguriert ist, den Aktuator (7) in einem Regelkreis hin zu einer Referenzgeschwindigkeit anzutreiben, wobei die effektive Geschwindigkeit des Benutzeroberflächenelements (2) kontinuierlich mit der Verarbeitungsgeschwindigkeit des Audiosignals (13) abgeglichen wird.

8. Vorrichtung nach Anspruch 1, wobei ein ausgewählter Modus (23) der Musikvorrichtung (1) ein Jog-Modus ist, wobei das anfängliche Antriebssignal an den Aktuator (7) Null ist und der Prozessor zum haptischen Rendern (10) dazu konfiguriert ist, den haptischen Effekt (9) basierend auf emulierter Reibung, emulierter Dämpfung und emulierter Trägheit, die auf die Benutzereingabe (4) an das Benutzeroberflächenelement (2) hin an das Antriebssignal des Aktuators (7) angelegt werden, zu erzeugen.

9. Vorrichtung nach Anspruch 1, wobei der Prozessor zum haptischen Rendern (10) dazu konfiguriert ist, an das Audiosignal (13) angelegte Hotcue-Informationen oder ein Beatgrid des Audiosignals (13) zu empfangen und den haptischen Effekt (9) so zu erzeugen, dass, wenn ein Hotcue oder ein Beatgrid in dem Audiosignal (13) passiert wird, ein entsprechender haptischer Effekt (9) an das Benutzeroberflächenelement (2) bereitgestellt wird, wobei der haptische Effekt (9) vorzugsweise ein Anhalten oder eine richtungsabhängige Dämpfung ist.

10. Vorrichtung nach einem der vorangehenden Ansprüche, wobei der Prozessor zum haptischen Rendern (10) dazu konfiguriert ist, ein Beatgrid des Audiosignals (13) auf die an das Benutzeroberflächenelement (2) angelegte Benutzerinteraktion hin zu ändern.

11. Vorrichtung nach einem der vorangehenden Ansprüche, wobei das Mittel zum Detektieren der Benutzereingabe (8) ein Mittel zum Detektieren von Bewegung des Benutzeroberflächenelements (2), vorzugsweise ein Mittel zum Detektieren einer Drehstellung und/oder Winkelgeschwindigkeit des Benutzeroberflächenelements (2), ist.

12. Vorrichtung nach einem der vorangehenden Ansprüche, wobei das Benutzeroberflächenelement (2) die Form eines Plattentellers aufweist, dessen obere Fläche (16) kreisförmig ist und dessen Seitenfläche (17) schräg ist,
wobei die obere Fläche (16) des Benutzeroberflächenelements (2) vorzugsweise parallel zu einer Fläche der haptisches Feedback gebenden Musikvorrichtung (1) oder eines Wheels oder Wheel-Segments mit einer zu der oberen Fläche (16) der haptisches Feedback gebenden Musikvorrichtung (1) parallelen Drehachse montiert ist.

13. Vorrichtung nach einem der vorangehenden Ansprüche, die ferner einen Prozessor zum visuellen Rendern (18), der mit dem Prozessor zum haptischen Rendern (10) und/oder der Audioverarbeitungseinheit (14) gekoppelt ist, und wenigstens ein visuelles Ausgabeelement (19), das mit dem Prozessor zum visuellen Rendern (18) gekoppelt ist, umfasst, um wenigstens eines aus dem erzeugten haptischen Effekt (9), Parametern des Audiosignals (13), Parametern der Verarbeitung des Audiosignals (13), Haptik-Einstellungen (11) und der Modusauswahl visuell darzustellen.

14. Vorrichtung nach einem der vorangehenden Ansprüche, wobei die Vorrichtung eine Vorrichtung (1) zur Wiedergabe des Audiosignals (13) ist und die Verarbeitung des Audiosignals (13) die Verarbeitung der Wiedergabe des Audiosignals (13) betrifft.

15. Vorrichtung nach einem der vorangehenden Ansprüche, wobei ein zweiter Aktuator (6) vorgesehen ist, um das Benutzeroberflächenelement (2) anzutreiben, und der Prozessor zum haptischen Rendern (10) dazu ausgelegt ist, ein zweites Antriebssignal an den zweiten Aktuator (6) auszugeben, vorzugsweise Vibrationseffekte senkrecht zu einer Drehbewegung des Benutzeroberflächenelements zu rendern.

16. Verfahren zur Steuerung der haptisches Feedback gebenden Musikvorrichtung nach Anspruch 1, das folgende Schritte umfasst:
Bereitstellen eines drehbaren, haptisches Feedback gebenden Benutzeroberflächenelements (2), das durch einen Aktuator (7) drehbar ist, wobei das Benutzeroberflächenelement (2) direkt mit dem Aktuator (7) gekoppelt ist und aus einem einzigen Teil oder einer Baugruppe aus Teilen, die ohne jegliche Relativbewegung ihrer Teile in Bezug aufeinander bereitgestellt ist, so dass alle Teile der Baugruppe stets die gleiche, aus der direkten Kopplung mit dem Aktuator (7) resultierende Drehbewegung vollziehen, besteht und wobei das Benutzeroberflächenelement (2) eine obere Fläche (16) und eine Seitenfläche (17) umfasst;
Anlegen einer Benutzereingabe (4) an das Benutzeroberflächenelement (2) durch einen Benutzer,
Detektieren der Benutzereingabe (4) an das Benutzeroberflächenelement (2),
Verarbeiten eines Audiosignals (13) durch eine Audioverarbeitungseinheit (14) gemäß der detektierten Benutzereingabe (4),
Ausgeben des Audiosignals (13) über einen Audioausgang (15),
Eingeben der detektierten Benutzereingabe (4) und von dem Audiosignal (13) zugeordneten Daten in einen Prozessor zum haptischen Rendern (10),
und ferner Empfangen - durch den Prozessor zum haptischen Rendern (1) - von wenigstens einem aus den Folgenden:
das verarbeitete Audiosignal (13),
durch den Benutzer anpassbare Parameter des Audiosignals (13),
durch den Benutzer anpassbare Parameter der Verarbeitung des Audiosignals (13),
durch den Benutzer anpassbare Haptik-Einstellungen (11) zum Rendern eines haptischen Effekts (9) und
eine Modusauswahlinformation;
Erzeugen eines haptischen Effekts (9) durch den Prozessor zum haptischen Rendern (10) basierend auf der empfangenen Eingabe und
Ausgeben eines Antriebssignals an den Aktuator (7) durch den Prozessor zum haptischen Rendern (10), wobei das Antriebssignal den erzeugten haptischen Effekt (9) umfasst, so dass an dem Benutzeroberflächenelement (2) ein haptisches Feedback erzeugt wird,
**dadurch gekennzeichnet, dass**
wenigstens ein Teil einer Fläche des Benutzeroberflächenelements (2) einen mit dem Prozessor zum haptischen Rendern (10) gekoppelten Berührungssensor (3) zum Detektieren einer Berührungseingabe des Benutzers umfasst, wobei der Berührungssensor (3) auf der oberen Fläche (16) des Benutzeroberflächenelements (2) oder der Seitenfläche (17) des Benutzeroberflächenelements angeordnet ist,
Umschalten eines Modus des Prozessors zum haptischen Rendern (10) abhängig davon, ob eine Fläche, die eine aus der oberen Fläche (16) oder der Seitenfläche (17) ist, die den Berührungssensor (3) aufweist, oder eine Fläche, die eine aus der oberen Fläche (16) oder der Seitenfläche (17) ist, die den Berührungssensor (3) nicht aufweist, berührt wird, so dass der Prozessor zum haptischen Rendern (10) abhängig von dem ausgewählten Modus unterschiedliche Antriebssignale erzeugt.

## Revendications

1. Dispositif de musique à rétroaction haptique (1) comprenant :
un élément d'interface utilisateur à rétroaction haptique rotatif (2) couplé à un actionneur (7) configuré pour entraîner de manière active l'élément d'interface utilisateur (2),
au moins un moyen de détection d'une entrée utilisateur (8),
une unité de traitement audio (14) adaptée à traiter un signal audio (13) en fonction de l'entrée utilisateur détectée (4) et à sortir le signal audio (13) par le biais d'une sortie audio (15),
dans lequel
un processeur de rendu haptique (10) est prévu couplé au moyen de détection d'une entrée utilisateur (8), à l'actionneur (7) et à l'unité de traitement audio (14), dans lequel le processeur de rendu haptique (10) est adapté à :
recevoir comme entrée l'entrée utilisateur détectée (4),
générer un effet haptique (9) sur la base de l'entrée reçue, et
sortir un signal d'entraînement vers l'actionneur (7), le signal d'entraînement comportant l'effet haptique généré (9) de telle sorte qu'une rétroaction haptique est générée au niveau de l'élément d'interface utilisateur (2),
dans lequel l'élément d'interface utilisateur (2) est directement couplé à l'actionneur (7), et consiste en une seule partie ou un ensemble de parties prévu sans aucun mouvement relatif de ses parties les unes par rapport aux autres de telle sorte que toutes les parties de l'ensemble réalisent toujours le même mouvement de rotation qui résulte du couplage direct avec l'actionneur (7),
dans lequel le processeur de rendu haptique (10) est adapté à recevoir comme autre entrée au moins une entrée parmi :
le signal audio (13) qui est traité,
des paramètres d'utilisateur réglables du signal audio (13),
des paramètres d'utilisateur réglables du traitement du signal audio (13),
des réglages haptiques d'utilisateur réglables (11) de rendu d'un effet haptique (9) et des informations de sélection de mode ;
dans lequel l'élément d'interface utilisateur (2) comprend une surface supérieure (16) et une surface latérale (17) ;
**caractérisé en ce que**
au moins une partie d'une surface de l'élément d'interface utilisateur (2) comprend un capteur tactile (3) couplé au processeur de rendu haptique (10) pour détecter une entrée tactile de l'utilisateur, le capteur tactile (3) étant agencé sur la surface supérieure (16) de l'élément d'interface utilisateur (2) ou sur la surface latérale (17) de l'élément d'interface utilisateur,
dans lequel le dispositif est configuré pour commuter un mode du processeur de rendu haptique (10) selon si une surface, qui est une surface parmi la surface supérieure (16) ou la surface latérale (17) qui présente le capteur tactile (3) ou une surface qui est une surface parmi la surface supérieure (16) ou la surface latérale (17) qui ne présente pas le capteur tactile (3), est touchée,
de telle sorte que le processeur de rendu haptique (10) génère différents signaux d'entraînement en fonction du mode sélectionné.

2. Dispositif selon la revendication 1, comprenant en outre une unité de reconnaissance de gestes haptiques (20) pour mapper l'entrée utilisateur détectée (4) sur des gestes haptiques prédéfinis, dans lequel
le processeur de rendu haptique (10) est adapté à rendre un effet haptique spécifique (9) sur la base du geste haptique reconnu, et/ou
le dispositif (1) est adapté pour la sélection d'un mode de dispositif spécifique (23) ou pour modifier un réglage haptique spécifique (11) sur la base du geste haptique reconnu.

3. Dispositif selon la revendication 2, dans lequel le geste haptique est un geste de retour (backspin) et l'entrée utilisateur correspondante (4) est un mouvement rapide dans la direction inverse par rapport à une vitesse et direction de référence, dans lequel l'effet haptique associé (9) est une inertie émulée pour un glissement continu de l'élément d'interface utilisateur (2) dans la direction inverse.

4. Dispositif selon la revendication 2, dans lequel le geste haptique est un geste de tempo et l'entrée utilisateur correspondante (4) est un mouvement prononcé en direction ou à l'opposé d'une vitesse et direction de référence afin d'accélérer ou de ralentir une vitesse effective de l'élément d'interface utilisateur (2) pendant un temps prédéfini, et dans lequel l'effet haptique (9) est un réglage de la vitesse de rotation vers la vitesse effective pendant l'entrée utilisateur (4), de préférence en faisant une moyenne sur un temps prédéfini avant que l'entrée utilisateur (4) se termine.

5. Dispositif selon la revendication 2, dans lequel le geste haptique est un geste de début où la vitesse de rotation initiale de l'élément d'interface utilisateur (2) est à zéro et l'entrée utilisateur correspondante (4) est un mouvement de l'élément d'interface utilisateur (2) dans le sens des aiguilles d'une montre, dans lequel l'effet haptique associé (9) envoi un signal de début au processus de rendu haptique (10) qui résulte en une continuation de la rotation vers une vitesse de référence non égale à zéro.

6. Dispositif selon une quelconque des revendications précédentes, dans lequel l'effet haptique (9) résulte d'une modification du signal d'entraînement appliqué à l'actionneur (7), de préférence à partir d'une application d'au moins une action parmi une modulation de vitesse de l'actionneur (7), une modulation de couple, une inertie émulée, une atténuation émulée, des bonds émulés ou des limites émulées.

7. Dispositif selon la revendication 1, dans lequel un mode sélectionné (23) du dispositif de musique (1) est un mode de plateau tournant, et le processeur de rendu haptique (10) est configuré pour entraîner l'actionneur (7) vers une vitesse de référence dans une boucle de commande, dans lequel la vitesse effective de l'élément d'interface utilisateur (2) est mappée de manière continue sur la vitesse de traitement du signal audio (13).

8. Dispositif selon la revendication 1, dans lequel un mode sélectionné (23) du dispositif de musique (1) est un mode de molette, dans lequel le signal d'entraînement initial vers l'actionneur (7) est à zéro, et le processeur de rendu haptique (10) est configuré pour générer l'effet haptique (9) sur la base du frottement émulé, de l'atténuation d'émulation et de l'inertie émulée appliquée au signal d'entraînement de l'actionneur (7) lors de l'entrée utilisateur (4) sur l'élément d'interface utilisateur (2).

9. Dispositif selon la revendication 1, dans lequel le processeur de rendu haptique (10) est configuré pour recevoir de informations de points de réplication (hot cues) appliquées au signal audio (13) ou une grille de rythme (beatgrid) du signal audio (13) et pour générer l'effet haptique (9) de telle sorte que si un hot cue ou une beatgrid passe dans le signal audio (13), un effet haptique correspondant (9) est prévu sur l'élément d'interface utilisateur (2), de préférence l'effet haptique (9) étant une détente ou une direction en fonction de l'atténuation.

10. Dispositif selon une quelconque des revendications précédentes, dans lequel le processeur de rendu haptique (10) est configuré pour modifier une beatgrid du signal audio (13) lors de l'interaction utilisateur appliquée sur l'élément d'interface utilisateur (2).

11. Dispositif selon une quelconque des revendications précédentes, dans lequel le moyen de détection de l'entrée utilisateur (8) est un moyen de détection de mouvement de l'élément d'interface utilisateur (2), de préférence un moyen de détection de position de rotation et/ou de vitesse angulaire de l'élément d'interface utilisateur (2).

12. Dispositif selon une quelconque des revendications précédentes, dans lequel l'élément d'interface utilisateur (2) a la forme d'un disque de plateau tournant avec la surface supérieure (16) qui est circulaire et la surface latérale (17) qui est inclinée,
la surface supérieure (16) de l'élément d'interface utilisateur (2) étant de préférence montée parallèlement à une surface du dispositif de musique à rétroaction haptique (1), ou d'une roue ou d'un segment de roue avec un axe de rotation parallèle à la surface supérieure (16) du dispositif de musique à rétroaction haptique (1).

13. Dispositif selon une quelconque des revendications précédentes, comprenant en outre un processeur de rendu visuel (18) couplé au processeur de rendu haptique (10) et/ou l'unité de traitement audio (14), et au moins un élément de sortie visuelle (19) couplé au processeur de rendu visuel (18) pour représenter visuellement au moins un élément parmi l'effet haptique généré (9), des paramètres du signal audio (13), des paramètres de traitement du signal audio (13), des réglages haptiques (11), et la sélection de mode.

14. Dispositif selon une quelconque des revendications précédentes, dans lequel le dispositif est un dispositif (1) pour reproduire le signal audio (13) et le traitement du signal audio (13) concerne le traitement de la reproduction du signal audio (13).

15. Dispositif selon une quelconque des revendications précédentes, dans lequel un second actionneur (6) est prévu pour entraîner l'élément d'interface utilisateur (2), et le processeur de rendu haptique (10) est adapté à sortir un second signal d'entraînement vers le second actionneur (6), de préférence à rendre des effets de vibration perpendiculairement à un mouvement de rotation de l'élément d'interface utilisateur.

16. Procédé destiné à commander le dispositif de musique à rétroaction haptique selon la revendication 1, comprenant les étapes de :
prévoir un élément d'interface utilisateur à rétroaction haptique rotatif (2) qui peut tourner par un actionneur (7), dans lequel l'élément d'interface utilisateur (2) est directement couplé à l'actionneur (7), et consiste en une seule partie ou un ensemble de parties prévu sans aucun mouvement relatif de ses parties les unes par rapport aux autres de telle sorte que toutes les parties de l'ensemble réalisent toujours le même mouvement de rotation qui résulte du couplage direct avec l'actionneur (7), et dans lequel l'élément d'interface utilisateur (2) comprend une surface supérieure (16) et une surface latérale (17) ;
appliquer, par un utilisateur, une entrée utilisateur (4) sur l'élément d'interface utilisateur (2),
détecter l'entrée utilisateur (4) sur l'élément d'interface utilisateur (2),
traiter un signal audio (13) par une unité de traitement audio (14) en fonction de l'entrée utilisateur détectée (4),
sortir le signal audio (13) par le biais d'une sortie audio (15),
entrer vers un processeur de rendu haptique (10) l'entrée utilisateur détectée (4) et des données associées au signal audio (13),
et recevoir en outre, par le processeur de rendu haptique (1), au moins un élément parmi:
le signal audio (13) qui est traité,
des paramètres d'utilisateur réglables du signal audio (13),
des paramètres d'utilisateur réglables du traitement du signal audio (13),
des réglages haptiques d'utilisateur réglables (11) pour le rendu d'un effet haptique (9), et
des informations de sélection de mode ;
générer un effet haptique (9) par le processeur de rendu haptique (10) sur la base de l'entrée reçue, et
sortir un signal d'entraînement vers l'actionneur (7) par l'intermédiaire du processeur de rendu haptique (10), le signal d'entraînement comportant l'effet haptique généré (9) de telle sorte qu'une rétroaction haptique est générée au niveau de l'élément d'interface utilisateur (2),
**caractérisé en ce que**
au moins une partie d'une surface de l'élément d'interface utilisateur (2) comprend un capteur tactile (3) couplé au processeur de rendu haptique (10) pour détecter une entrée tactile de l'utilisateur, le capteur tactile (3) étant agencé sur la surface supérieure (16) de l'élément d'interface utilisateur (2) ou la surface latérale (17) de l'élément d'interface utilisateur, commutant un mode du processeur de rendu haptique (10) selon si une surface, qui est une surface parmi la surface supérieure (16) ou la surface latérale (17) qui présente le capteur tactile (3) ou une surface qui est une surface parmi la surface supérieure (16) ou la surface latérale (17) qui ne présente pas le capteur tactile (3), est touchée, de telle sorte que le processeur de rendu haptique (10) génère différents signaux d'entraînement en fonction du mode sélectionné.
